# EUROPÄISCHE PATENTSCHRIFT

(11) **EP 0 628 470 B1**
(45) Veröffentlichungstag und Bekanntmachung des Hinweises auf die Patenterteilung: **04.11.1998**
(21) Anmeldenummer: 94810330.4
(22) Anmeldetag: 02.06.1994
(51) Int. Cl.: B62D 33/04, B62D 31/04, B61D 3/02

(54) **Gerippestruktur**
Skeleton frame
Ossature

(30) Priorität: 08.06.1993 CH 1713/93
(43) Veröffentlichungstag der Anmeldung: 14.12.1994
(73) Patentinhaber: Alusuisse Technology & Management AG, 8212 Neuhausen am Rheinfall (CH)
(72) Erfinder: Waldeck, Klaus-Dieter, CH-8954 Geroldswil (CH); Melina, Vito, CH-5000 Aarau (CH)

(56) Entgegenhaltungen:
- EP-A- 0 129 989
- DE-A- 3 424 690
- FR-A- 656 267
- FR-A- 2 635 064
- GB-A- 526 041
- GB-A- 659 902
- US-A- 4 281 870

## Beschreibung

Vorliegende Erfindung betrifft eine Gerippestruktur eines Wagenkastens nach dem Oberbegriff von Anspruch 1.

Eine solche Gerippestruktur ist aus DE-A-34 24 690 bekannt. Der seitliche Versatz der Bodenplatte eines Podestbodens zu den Seitenwandsäulen der bekannten Struktur ergibt sich dort über ein längslaufendes, die einzelnen Seitenwandsäulen verbindendes Profil. Dieses durchgehende Längsprofil bildet gleichzeitig einen Randabschluss für die Bodenplatte des Podestbodens. Der konsolenförmige Längsträger bietet bei Seitenaufprall über die ganze Länge des Wagenkastens Angriffsflächen und kann zur Zerstörung der gesamten Bodenplatte führen.

Es ist bekannt, Gerippestrukturen auf Fahrgestellrahmen (Chassis), wie z.B. Leiterrahmen, aufzusetzen. Die Fahrgestellrahmen sind bei Strassenfahrzeugen, wie Bussen, mit den Achsen, Motor, Getriebe und den weiteren Antriebsteilen ausgerüstet. Die Gerippestruktur wird auf dem Fahrgestellrahmen festgelegt und die Grippestruktur kann zu einem Passagierraum ausgestaltet werden. Die Gerippestruktur stützt sich auf ihrer ganzen Länge über den Boden auf dem Fahrgestellrahmen ab.

Die Gerippestruktur kann neben den Seitenwandsäulen noch Längs-, Quer-Boden- und Dachgurten aufweisen. Ferner wird in der Regel ein Boden und ein Dach und fallweise ein Zwischenboden in die Gerippestruktur eingebaut. Konstruktionen von Zwischenböden in Doppeldeckerbussen sind beispielsweise aus der EP-A 0 129 989 bekannt. Die dort beschriebenen Zwischenböden sind konvex gestaltete plattenförmige Elemente aus einem unteren und oberen Blech und dazwischen angeordneten gefalteten Distanzblechen. Die nach dieser Literaturstelle beschriebenen Zwischenböden ist auf eine kleine Materialauswahl beschränkt.

Aufgabe vorliegender Erfindung ist es, eine Gerippestruktur und Zwischenböden dafür zur Verfügung zu stellen, welche die festgestellten Schwachpunkte nicht aufweist und Zwischenböden vorzuschlagen, welche durch ihren Aufbau und Materialwahl überragende Eigenschaften aufweisen.

Erfindungsgemäss wird dies durch die Merkmale von Anspruch 1 erreicht.

In zweckmässiger Ausführungsform kann die Zwischenbodenplatte beispielsweise auf halber Höhe der vertikalen Seitenwandsäulen angeordnet sein.

Zwischenbodenplatten können beispielsweise bei zweistöckigen Buskonstruktionen oder bei Hochdeckerbuskonstruktionen angewendet werden.

Eine Zwischenbodenplatte stellt bevorzugt ein einstückiges oder einteiliges Bauteil dar, das sich im wesentlichen über die Grundfläche der Gerippestruktur erstreckt.

Die Verbundkonstruktion der Zwischenbodenplatte kann beispielsweise dreischichtig aus einer Deck-, einer Basis- und einer Zwischen- oder Kernschicht aufgebaut sein.

Die Basis- und die Deckschicht kann aus Materialien, wie Kunststoffen oder Metallen sein. Als Kunststoffe werden z.B. armierte Kunststoffe bevorzugt. Solche armierten Kunststoffe sind beispielsweise mit Verstärkungsfasern, wie Glasfasern, Kohlefasern, Aramidfasern, Polyamidfasern usw. oder Geweben, Gewirken oder Vliesen genannter Materialien verstärkte Kunststoffe.

Die Kunststoffe sind z.B. ungesättigte Polyesterharze oder Epoxidharze oder auch Polyolefin- oder Polyamidharze.

Bevorzugt als Basis- und Deckschicht werden Metallschichten, z.B. aus Eisen- und Nichteisenmetallen, wie Stahl, verzinkter Stahl oder Eisen, oder Aluminium. Mit der Bezeichnung Aluminium sind in vorliegender Erfindung auch die handelsüblichen Aluminiumlegierungen umfasst. Bevorzugt werden Aluminium und dessen Legierungen.

Die Kunststoffe sind z.B. ungesättigte Polyesterharze oder Epoxidharze oder auch Polyolefin- oder Polyamidharze.

Die Dicke solcher Basis- und Deckschichten kann z.B. von 0,7 bis 5 mm betragen.

Die Dicke der Basisschicht kann beispielsweise von 0,9 bis 5 mm, vorzugsweise 1 bis 2 mm und insbesondere bis 1,1 mm betragen.

Die Dicke der Deckschicht kann beispielsweise von 0,7 bis 5 mm, vorzugsweise von 0,9 bis 2 mm und insbesondere bis 1,1 mm betragen.

Die Kernschicht ist ein schaumförmiges Material aus Kunststoff, wie beispielsweise aus thermoplastischen Kunststoffen der Reihe der harten Polyvinylchloridschäume, der harten Polyurethanschäume, der Polystyrolschäume, der Harnstoff-Formaldehydschäume, der Phenol-Formaldehydharzschäume, der Schäume aus ungesättigtem Polyesterharz, PIR, PMI, Styrolbuadien, Acrylinitrilstyrolbutadien, Polyethylen, Polypropylen, Polycarbonate und Polyphenylenoxid. Die Zellstruktur kann geschlossenzellig, offenzellig oder gemischtzellig sein.

Der Aufschäumungsprozess kann durch physikalische Treibmittel oder chemische Treibmittel erfolgen.

Es können Schäume mit gleichmässiger Dichteverteilung oder Integral-oder Strukturschaumstoffe angewendet werden.

Die Schäume können als Form-, Block- oder Bandschäume gefertigt werden.

Besonders bevorzugt sind harte Polyvinylchloridschäume oder harte Polyurethanschäume.

Die Kernschicht aus schaumförmigem Material kann auch Verstärkungsmaterialien, wie Verstärkungsfasern, Füllstoffe, Verarbeitungshilfsmittel und Hilfsmittel zur Erhöhung der Alterungsbeständigkeit, Flammschutzmittel zur Erhöhung der Feuerfestigkeit, Rauchunterdrücker usw. enthalten.

Das schaumförmige Material aus Kunststoffen kann mit der Basis- und der Deckschicht kaschiert werden. Beispielsweise können die Klebeigenschaften der Kunststoffe, wie der Polyurethane, ausgenützt werden oder die Basis-, die Deckschicht und/oder das schaumförmige Material können angelöst, angequollen oder angeschmolzen und mit der anderen Schicht verbunden werden. Die Anwendung von Klebstoffen, Klebebändern und dergleichen zwischen den Schichten ist ebenfalls möglich.

Die Verbundkonstruktion der Zwischenbodenplatte kann zumindest an den Seitenrändern, an den Seitenrändern und dem hinteren und vorderen Rand und gegebenenfalls auch im Bereich zwischen den Rändern verteilt, Profile, wie Kunststoff- oder Metallprofile und insbesondere Metallprofile, wie stranggepresste Profile, beispielsweise aus Aluminium oder Aluminiumlegierungen, aufweisen. Die Profile an den Seitenrändern des plattenförmigen Elementes bilden die Bodenlängsprofile oder randständigen Profile.

Die Profile können Doppel-T- oder Hohlkammerprofile sein, deren Höhe beispielsweise der Dicke der Kernschicht entspricht. Die Profile bilden dann Stege zwischen der Basis- und der Deckschicht.

Die randständigen Profile können auch in der Höhe die Dicke des plattenförmigen Elementes überragen.

Die plattenförmigen Elemente können zweckmässig randständig offene Profile aufweisen.

Die randständigen Profile können bevorzugt Mehrkammerhohlprofile sein.

Die randständigen Profile der Verbundkonstruktion des Zwischenbodens können zumindest auf der nach aussen gerichteten Seite offen sein und wenigstens eine Nut oder ein C-Profil oder C-Profilteil sein oder können mit Wulsten versehen sein und somit Befestigungsmittel bilden. An den Konsolen sind kongruent dazu Befestigungsmittel, wie Wulste oder Doppelwulste oder C-Profile vorgesehen, wobei die Befestigungsmittel gegenseitig in Berührung gebracht und gegeneinander festgelegt werden können.

Bevorzugt sind Zwischenbodenplatten, die als mehrschichtige Verbundplatten mit randständigen offenen Profilen vorliegen.

Die Verbundkonstruktion kann beispielsweise einen Kern aus schaumförmigem Material aus Kunststoff können z.B. eine Dicke von 10 bis 100 mm, zweckmässig von 10 bis 50 mm und bevorzugt von 20 bis 40 mm aufweisen.

Ganz besonders bevorzugt ist als Zwischenbodenplatte eine einstückige Verbundkonstruktion, wobei die Verbundkonstruktion eine untere und eine obere Deckschicht aus Aluminium in einer Dicke von 0,8 bis 2,0 mm und eine Kernschicht in einer Dicke von 20 bis 50 mm aus Hartschaumstoffen aus Kunststoff enthält.

Dieser Hartschaumstoff enthält vorwiegend oder besteht aus hartem Polyurethan oder hartem Polyvinylchlorid.

Bevorzugt sind Deckschichten aus Aluminium oder dessen Legierungen. Bevorzugt sind Kernschichten aus hartem Polyvinylchloridschaum oder aus hartem Polyurethanschaum.

Die Gerippestruktur nach vorliegender Erfindung weist ein seitliches Profilgerippe aus vertikalen Seitenwandsäulen und gegebenenfalls horizontal angeordnete Längsgurten, Abdeckbleche und Verkleidungen auf.

Zweckmässig weist das seitliche Profilgerippe zwischen dem Bodenbereich und einem durchgehenden Dachprofil angeordnet vertikale Seitenwandsäulen auf und die Seitenwandsäulen sind einstückige stranggepresste Hohlkammerprofile.

Das Profilgerippe ist beispielsweise auf allen Seiten, und insbesondere auf den Längsseiten einer Gerippestruktur, angeordnet.

Die Seitenwandsäulen können in regelmässigen oder unregelmässigen Abständen, über die Seiten der Gerippestruktur verteilt, angeordnet sein. Die Abstände können beispielsweise 0,5 m bis 1,5 m betragen.

Die Seitenwandsäulen sind z.B. Hohlkammerprofile, wobei die Hohlkammer einen rechteckigen Querschnitt aufweisen kann. An den Stirnflächen der Seitenwandsäulen können beispielsweise fahnenförmige Verlängerungen oder C-Profile angeformt sein oder die Stirnwände können hinterschnittene Nuten aufweisen.

Zweckmässig sind an jedem Ende des Nagenkastens die ersten und die letzten Seitenwandsäulen der seitlichen Gerippestruktur einstückige stranggepresste Mehrkammerhohlprofile.

Anstelle der ersten resp. letzten Seitenwandsäulen können auch die zweiten resp. zweitletzten Seitenwandsäulen in Form von stranggepressten Mehrkammerhohlprofilen verwendet werden. Es ist auch möglich, einzelne oder mehrere der mittleren Seitenwandsäulen Form von stranggepressten Mehrkammerhohlprofilpfosten zu verwenden.

Solche Mehrkammerhohlprofile enthalten in der Regel zwei Hohlkammern. Die Stirnseiten können entsprechend der Anzahl Kammern angeformte Fahnen, C-Profile oder hinterschnittene Nuten aufweisen.

Zwischen den Seitenwandsäulen können Wandverkleidungen, Fensterrahmen, Fensterkonstruktionen und Türrahmen oder Türkonstruktionen angeordnet werden. Es ist auch möglich, entlang den Seitenwänden, festgelegt an den Seitenwandsäulen, Längsprofile, Mittelgurten, durchgehende Profile oder aussen Schürzen anzubringen. Durchgehende horizontale Profile können beispielsweise zur Befestigung von Sitzen, Heizungsapparaten oder Haltevorrichtungen dienen. Äussere Schürzen schützen z.B. vor Beschädigungen und decken die Konstruktionselemente ab.

Die seitliche Begrenzung der Zwischenbodenplatten ist einem Abstand, d.h. in seitlichem Versatz von den Seitenwandsäulen angeordnet.

Die Verbindung zwischen den Zwischenbodenplatten und dabei insbesondere deren seitlichen Begrenzungen und den einzelnen Profilpfosten wird durch Konsolen ausgeführt. Vorteilhaft ist jeder Seitenwandsäule eine Konsole zugeordnet. Die Konsolen können beispielsweise an wenigstens einer Stirnseite jeweils einer Seitenwandsäule beispielsweise mittels einer Feder oder einem Wulst, welche in eine Nut der Seitenwandsäule greifen, festgelegt sein. An einer unteren inneren, d.h. gegen die Zwischenbodenplatte gerichteten Seite der Konsole kann beispielsweise eine waagrecht verlaufende Feder, ein Wulst, eine Doppelfeder oder ein Doppelwulst vorgesehen sein, welche in ein Längsprofil randständig an der Zwischenbodenplatte mit entsprechender einfacher oder doppelter Nut greift. Die Längsprofile einer Zwischenbodenplatte erstrecken sich vorteilhaft einstückig seitlich über dessen ganze Länge. Das Längsprofil ist auf einer Seite an der Zwischenbodenplatte und auf der gegenüberliegenden Seite jeweils an den Konsolen festgelegt. Die Zwischenbodenplatte kann beispielsweise durch Klemm-, Klebe-, Schweiss-, Schraub- und/oder Nietverbindungen mit dem Längsprofil verbunden werden.

Bevorzugt ist, dass die Zwischenbodenplatte eine einteilige mehrschichtige Verbundplatte ist, die sich über den ganzen Bereich der Ausdehnung zwischen den vertikalen Seitenwandsäulen erstreckt.

Die Konsolen bringen die Seitenwandsäulen und den Rand der Zwischenbodenplatte oder das Längsprofil der Zwischenbodenplatte in einen seitlichen Abstand von beispielsweise 20 bis 300 mm und bevorzugt von 50 bis 150 mm.

Die Konsolen können in jeder Höhe an den Seitenwandsäulen befestigt werden und entsprechend ist es möglich, auf beliebiger Höhe bezüglich der Seitenwandsäulen Zwischenböden anzuordnen.

Die Gerippestruktur gemäss vorliegender Erfindung kann selbsttragend sein.

Vorliegende Erfindung betrifft auch die Verwendung der erfindungsgemässen Gerippestruktur als Kastenaufbau oder Kasteneinbau für Strassen-, Wasser- oder Schienenfahrzeuge.

Insbesondere betrifft vorliegende Erfindung die Verwendung der Gerippestruktur als Kastenaufbau für Strassenfahrzeuge für den Personentransport, für Busse, für Reisebusse, für Omnibusse oder Busse des öffentlichen Personennahverkehrs. Zwischenböden sind insbesondere vorgesehen in Doppelstockbussen oder Hochdeckerbussen.

Vorliegende Erfindung wird beispielhaft an den Figuren 1 bis 4 weiter erläutert.

Figur 1 zeigt einen Ausschnitt aus dem Querschnitt durch eine Gerippestruktur im Bereich einer Zwischenbodenplatte.

Figur 2 zeigt eine Säulenkonsole.

Figur 3 zeigt einen Ausschnitt auf dem Querschnitt der Gerippestruktur im Bereich einer Zwischenbodenplatte anderer Ausführungsform.

Figur 4 zeigt eine Säulenkonsole anderer Ausführungsform.

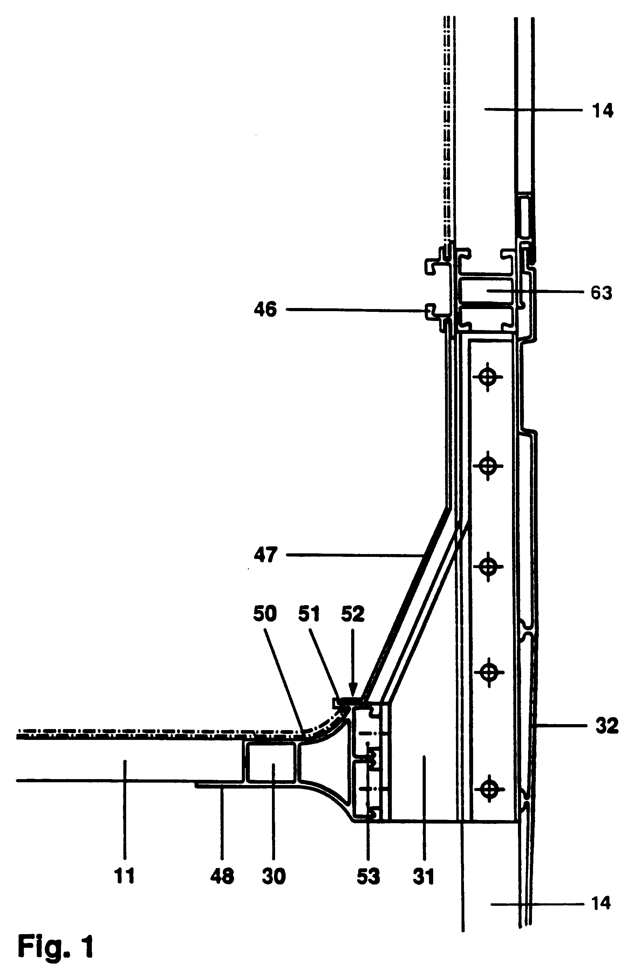

Die Figur 1 zeigt einen Ausschnitt aus dem Querschnitt durch eine Gerippestruktur nach vorliegender Erfindung. Die Zwischenbodenplatte 11 als Verbundkonstruktion, ist seitenwandständig mit einem Profil 30 trennfest verbunden. Das Profil 30 ist beispielhaft als Dreikammerhohlprofil ausgestaltet. Das Profil 30 enthält eine erste Kammer, und angeformt an diese erste Kammer einen fahnenförmigen Ansatz 48, an dem die untere Basisfläche der Verbundkonstruktion der Zwischenbodenplatte 11 aufliegt und gegebenenfalls trennfest verbunden ist. Die trennfeste Verbindung kann beispielsweise mit Klebeband und/oder Klebstoff, gegebenenfalls zusäztlich geklemmt mit Klemmleisten oder Klemmplättchen und Schraubenverbindungen, erfolgen.

Neben der ersten Kammer kann eine zweite Kammer angeordnet sein, die auf der nach der Wagenkasteninnenseite gerichteten Seitenwand 50 bogenförmig ansteigt und die obere Abdeckung des Profiles einen Vorsprung 51 bildet. Seitlich der zweiten Kammer sind C-Profile oder hinterschnittene Nuten 53 angeordnet. Mit diesen Nuten 53 korrespondieren die Wülste 45 der Aussenseite 44 der Konsolen 31. Es sind eine Mehrzahl von Konsolen über die Länge der Zwischenbodenplatte 11 verteilt angeordnet. Durch Klemmplättchen angeordnet in den C-Profilen und Schrauben kann das Profil 30 mit den Konsolen 31 trennfest verbunden werden.

Bodenbeläge können auf der Verbundkonstruktion der Zwischenbodenplatte 11 ausgelegt und an den Rändern in die bogenförmige Steigung 50 hinein bis zum Vorsprung 51 ausgelegt werden. Damit wird erreicht, dass Schmutz, Feuchtigkeit und Flüssigkeiten nicht unter den Bodenbelag gelangen können. Auf die Fläche 52 kann beispielsweise ein Abdeckblech 47 gelegt werden. Das Abdeckblech 47 kann sich durchgehend entlang der Seitenwände erstrecken und deckt die Zwischenräume zwischen den Konsolen 31 ab. Gegengleich können Schürzen 32 die Aussenseite der Gerippestruktur abdecken. Zwischen den Seitenwandsäulen 14 und der jeder Seitenwandsäule 14 zugeordneten Konsole 31 können Profilstäbe 63 angebracht sein. Über und unter diesen Profilstäben 63 können Verkleidungs- und/oder Isolierelemente angeordnet sein. In der Höhe der Profilstäbe 63, nach innen gerichtet, kann ein durchgehendes Profil 46 angeordnet werden.

Das Profil 46 kann eine untere und eine obere U-förmige Rinne aufweisen. In der unteren U-förmigen Rinne kann das Abdeckblech 47 eingeschoben werden, in die obere U-förmige Rinne kann beispielsweise eine Innenverkleidung eingesetzt werden. Das durchgehende Profil 46 weist beispielsweise auch eine C-förmige Rinne oder hinterschnittene Nut auf. In diese Nut können Befestigungselemente, wie Klemmplättchen oder Nutensteine, eingelegt werden und beispielsweise Schrauben, welche zur Sitzkonstruktion gehören, können mit dem Innengewinde am Klemmplättchen oder den Nutensteinen eine Verbindung zur Befestigung der Sitzkonstruktion ausbilden.

Fensterrahmenkonstruktionen mit Fenstern und Türrahmenkonstruktionen mit Türen können zwischen den Profilpfosten angeordnet und an diesen festgelegt werden. Desgleichen können unter, über oder anstelle von Fenstern oder Türen Verkleidungen angebracht werden.

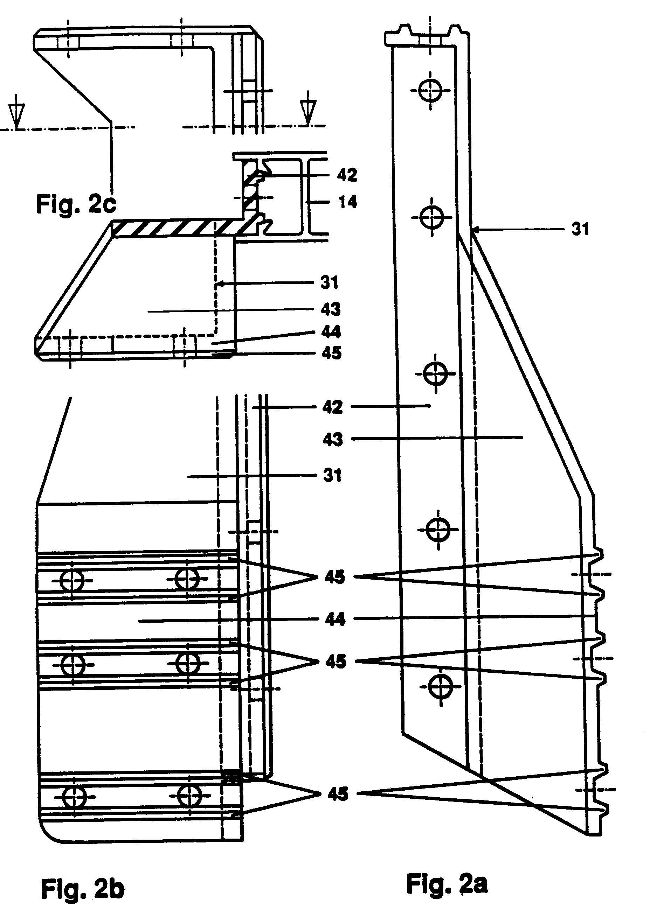

Die Figur 2a zeigt ein Beispiel einer Ansicht einer Konsole 31. Die Säulenkonsole kann beispielsweise ein Schmiede- oder Gussstück aus Metall, wie Aluminium, darstellen.

An einem säulenförmigen Teil 42 sind eine Mehrzahl von Bohrungen angebracht. Auf einer Stirnseite, über die ganze Höhe, verlaufen links und rechts der Bohrungen Federn oder wulstförmige Erhöhungen, welche mit den Nuten an den Stirnwänden der Profilpfosten korrespondieren.

Mittels Schrauben, die durch die Bohrungen geführt werden, können die Säulenkonsolen an den Profilpfosten festgelegt werden, wobei die Schrauben mit Klemmplättchen, die in einer hinterschnittenen Nut des Profilpfostens angeordnet sind, festgelegt sein können.

Vom säulenförmigen Teil 42 kragt eine Seitenfläche 43 ab. An der Aussenseite 44 der Seitenfläche 43 waagrecht und in einem rechten Winkel zu den wulstförmigen Erhöhungen des säulenförmigen Teiles 42 sind beispielsweise zwei oder drei Wulstpaare 45 angeordnet. Die Wulstpaare 45 können in die Nuten des randständigen Profiles 30 der Zwischenbodenplatte 11 eingreifen. In der Regel greifen zwei Wulstpaare 45 in die Nuten des randständigen Profiles 30 der Zwischenbodenplatte 11 ein. Die Säulenkonsole 31 wird z.B. durch Schrauben und Klemmplättchen am randständigen Profil 30 festgelegt.

Die Schraubenhälse werden durch Bohrungen, die zwischen den Wulsten 45 liegen, geführt, während die Klemmplättchen mit Innengewinde innerhalb der hinterschnittenen Nut des Profils 30 angeordnet sind und mittels der Schrauben gegen die Nocken der Hinterschneidungen gepresst werden.

Figur 2b zeigt eine Seitenansicht der Konsole 31. Waagrecht zum säulenförmigen Teil 42 und um 90 ° gedreht, sind die drei Wulstpaare 45 an der Aussenseite 44 angeordnet.

Figur 2c zeigt eine Draufsicht auf eine Konsole 31. Der säulenförmige Teil 42 weist ein Wulstpaar auf, das in eine Nut an der Stirnwand einer Seitenwandsäule 14 greifen und dort mit Schrauben und Klemmplättchen festgelegt werden kann. An der Aussenwand 44 sind die Wulstpaare 45 angeordnet. Der säulenförmige Teil 42 ist über die Seitenfläche 43 mit der Aussenseite 44 verbunden. Es ist erkennbar, dass die Konsolen 31 auf jeder Höhe einer Seitenwandsäule 14 festlegbar sind, da die Konsolen 31 entlang den C-Profilen verschoben und durch klemmen festgelegt werden können.

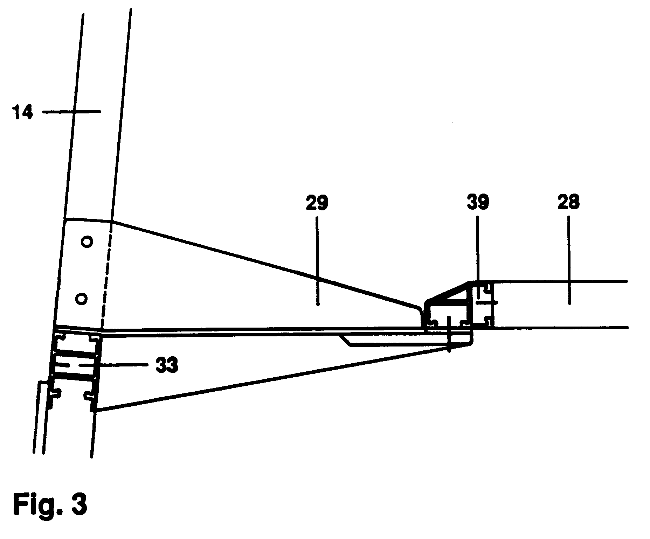

Die Figur 3 stellt einen Ausschnitt aus dem Wagenkastenquerschnitt dar.

An der hinterschnittenen Nut an einer Stirnwand einer Seitenwandsäule 14 kann die Variante einer Konsole 29 festgelegt werden. Das Festlegen kann beispielsweise mittels Schrauben und Klemmstücken erfolgen. Über Eckverbindungsstücke kann jeweils zwischen zwei Seitenwandsäulen 14 ein Profilstab 33 festgelegt werden. Der Profilstab 33 kann oben und unten hinterschnittene Nuten zur Aufnahme von Klemmstücken aufweisen.

Die Konsolen 29 halten ein Hohlkammerprofil 39, welches hier beispielhaft zwei C-förmige Anformungen aufweist. Die eine C-förmige Anformung oder hinterschnittene Nut dient zur Aufnahme der Klemmstücke, welche mit Schrauben die feste Verbindung zwischen Konsole 29 und Hohlkammerprofil 39 ausbilden. Desgleichen dient eine weitere C-förmige Anformung zur Befestigung einer Zwischenbodenplatte 28. Die Zwischenbodenplatte 28 stellt wiederum eine Verbundplatte dar. Das Hohlkammerprofil 39 kann als integriertes Randprofil der Verbundplatte ausgelegt sein.

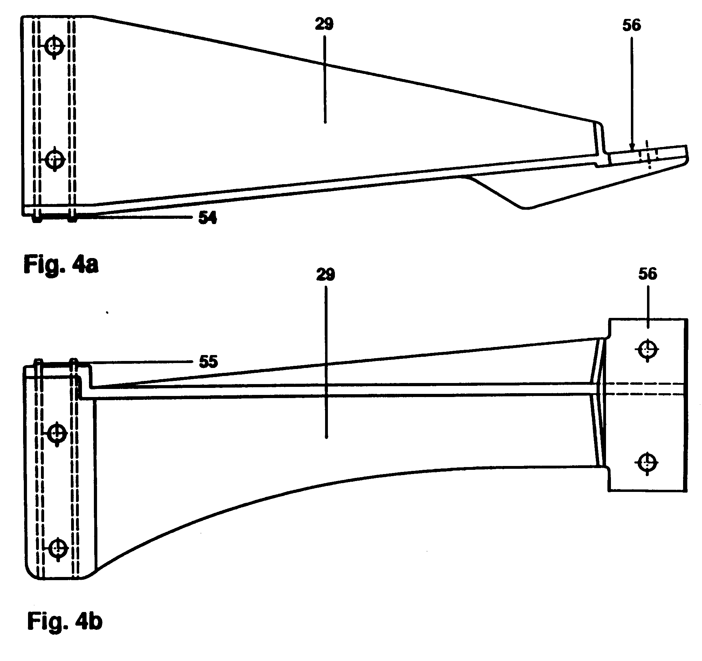

Die Figur 4a zeigt die Seitenansicht, die Figur 4b die Draufsicht einer beispielhaften Konsole 29. Das Wulstpaar 55 kann an den Seitenflächen in Form einer hinterschnittenen Nut einer Seitenwandsäule festgelegt werden. An das Wulstpaar 54 kann die hinterschnittene Nut eines Profilstabes, welcher zwischen zwei Seitenwandsäulen angeordnet ist, festgelegt werden. Die Konsole 29 kann somit auch die Funktion eines Eckstückes übernehmen. Am inneren Ende der Konsole 29 ist die Auflagefläche 56. Auf dieser Auflagefläche 56 kann die Zwischenbodenplatte befestigt werden. Die Konsolen 29 können beispielsweise Schmiede- oder Gussstücke aus Metall, wie Aluminium, sein.

Die Profile, wie Seitenwandsäulen, Profilpfosten, Profilstäbe, Vertikalprofile usw. können beispielsweise mittels Eckstücken, Winkelstücken und dergl. miteinander verbunden werden. Beispiele für derartige Verbindungen können der CH-PS 627 982 oder der EP-A 0 136 264 entnommen werden. Die Befestigung der Zwischenböden kann beispielsweise gemäss einer Ausführungsform, wie in der EP-B 0 185 678 beschrieben, verwirklicht werden.

## Patentansprüche

1. Gerippestruktur eines Wagenkastens, mit vertikalen Seitenwandsäulen (14) und wenigstens einer horizontal und in seitlichem Versatz zu den Seitenwandsäulen (14) angeordneten Zwischenbodenplatte (11,28), wobei die Zwischenbodenplatte (11,28) eine mehrschichtige Verbundplatte mit einer Deckschicht, einer Basisschicht und einer aus schaumförmigem Kunststoffmaterial bestehenden Zwischenschicht ist und mittels den Seitenwandsäulen (14) zugeordneten Konsolen (29,31), die einerseits an den Seitenwandsäulen (14) und andererseits an Randbereichen der Zwischenbodenplatte (11,28) festgelegt sind, gehalten ist,
dadurch gekennzeichnet, dass
beidseitig des Wagenkastens mehrere Konsolen (29,31) entlang jeder Seitenwand unter Bildung von Zwischenräumen voneinander beabstandet sind und dass die Zwischenbodenplatte (11,28) zwischen den Konsolen (29,31) freitragend ist.

2. Gerippestruktur nach Anspruch 1, dadurch gekennzeichnet, dass die Zwischenbodenplatte (11,28) randständig offene Profile aufweist.

3. Gerippestruktur nach Anspruch 1 oder 2, dadurch gekennzeichnet, dass die Zwischenbodenplatte (11,28) einteilig ist und sich im wesentlichen über die Grundfläche der Gerippestruktur erstreckt.

4. Gerippestruktur nach einem der Ansprüche 1 bis 3, dadurch gekennzeichnet, dass die Konsolen (29,31) an wenigstens einer Stirnseite jeweils einer Seitenwandsäule (14) mittels einer in eine Nut (53) der Seitenwandsäule (14) greifenden Feder oder Wulst (45,54,55) festgelegt ist und an einer unteren nach innen gerichteten Seite der Konsole (29,31) eine waagrecht verlaufende Feder, ein Wulst, eine Doppelfeder oder ein Doppelwulst vorgesehen ist, welche in ein randständig an der Zwischenbodenplatte (11,28) angeordnetes Längsprofil (30) mit entsprechender einfacher oder doppelter Nut greift.

## Claims

1. Framework structure for a vehicle body, comprising vertical side-wall columns (14) and at least one false floor panel (11, 28) arranged horizontally and laterally offset relative to the side-wall columns (14), in which false floor panel (11, 28) is a multi-layer composite panel with an outer layer, a base layer and an intermediate layer consisting of foamed plastic material and is held by means of brackets (29, 31) associated with the side-wall columns (14) and secured, on the one hand, to the side-wall columns (14) and, on the other hand, to edge regions of the false floor panel (11, 28), characterised in that a plurality of brackets (29, 31) are arranged at a distance from one another along each side wall on either side of the vehicle body, thereby forming intermediate spaces, and that the false floor panel (11, 28) is self-supporting between the brackets (29, 31).

2. Framework structure according to claim 1, characterised in that the false floor panel (11, 28) has open profiles at its edges.

3. Framework structure according to claim 1 or claim 2, characterised in that the false floor panel (11, 28) is made in one part and extends substantially over the base of the framework structure.

4. Framework stucture according to one of claims 1 to 3, characterised in that the brackets (29, 31) are secured to at least one end lace of each side-wall column (14) by means of a tongue or a bulb (45, 54, 55) engaging in a groove (53) in the sidewall column (14), and a horizontally extending tongue, bulb, double tongue or double bulb is provided on a lower, inwardly directed side of the bracket (29, 31) and engages in a longitudinal profile (30) arranged on the edge of the false floor panel (11, 28) by means of a corresponding single or double groove.

## Revendications

1. Ossature d'une carrosserie de véhicule, comportant des colonnes verticales (14) de paroi latérale et au moins un panneau de plancher intermédiaire (11, 28) horizontal et disposé en une position décalée latéralement par rapport aux colonnes (14) de paroi latérale, dans laquelle le panneau de plancher intermédiaire (11, 28) est un panneau composite multicouche comprenant une couche de couverture, une couche de base et une couche intermédiaire constituée d'un matériau mousse plastique et est maintenu au moyen de consoles (29, 31) qui sont associées aux colonnes (14) de paroi latérale et sont fixées d'une part aux colonnes (14) de paroi latérale et d'autre part aux zones de bordure du panneau de plancher intermédiaire (11, 28),
caractérisée
par le lait que, des deux côtés de la carrosserie de véhicule, plusieurs consoles (29, 31) sont a une certaine distance l'une de l'autre le long de chaque paroi latérale, en formant des espaces intermédiaires, et que le panneau de plancher (11, 28) est autoportant entre les consoles (29, 31).

2. Ossature selon la revendication 1, caractérisée par le fait que le panneau de plancher (11, 28) présente en bordure des profilés ouverts.

3. Ossature selon la revendication 1 ou 2, caractérisée par le fait que le panneau de plancher intermédiaire (11, 28) est monobloc et s'étend sensiblement sur la surface de base de l'ossature.

4. Ossature selon l'une des revendications 1 à 3, caractérisée par le fait que les consoles (29, 31) sont fixées à, chacune, au moins une face frontale d'une colonne (14) de paroi latérale au moyen d'une clavette ou d'un bourrelet (45, 54, 55) qui vient en prise dans une rainure (53) de la colonne (14) de paroi latérale et que sur une face inférieure, orientée vers l'intérieur, de la console (29, 31) est prévu une clavette, un bourrelet, un ressort elliptique ou un double bourrelet, orienté horizontalement, qui vient en prise avec une rainure simple ou double correspondante dans un profilé longitudinal (30) disposé en bordure sur le panneau de plancher intermédiaire (11,28).
